# EUROPÄISCHE PATENTSCHRIFT

(11) **EP 1 518 110 B1**
(45) Veröffentlichungstag und Bekanntmachung des Hinweises auf die Patenterteilung: **15.07.2009**
(21) Anmeldenummer: 03756943.1
(22) Anmeldetag: 20.05.2003
(51) Int. Cl.: G01N 27/406

(54) **SENSORELEMENT**
SENSOR ELEMENT
ELEMENT CAPTEUR

(30) Priorität: 06.06.2002 DE 10225149
(43) Veröffentlichungstag der Anmeldung: 30.03.2005
(73) Patentinhaber: ROBERT BOSCH GMBH, 70442 Stuttgart (DE)
(72) Erfinder: KANTERS, Johannes, 70197 Stuttgart (DE); DIEHL, Lothar, 70839 Gerlingen (DE); RODEWALD, Stefan, 71254 Ditzingen (DE)
(86) Internationale Anmeldenummer: PCT/DE2003/001626
(87) Internationale Veröffentlichungsnummer: WO 2003/104790

(56) Entgegenhaltungen:
- DE-A- 10 058 643
- DE-A- 19 834 276
- DE-A- 19 857 470
- DE-A- 19 932 545
- DE-A1- 10 054 828
- US-A- 4 650 560
- US-A- 5 516 410

## Beschreibung

### Stand der Technik

Die Erfindung geht aus von einem Sensorelement nach dem Oberbegriff des unabhängigen Anspruchs.

Ein derartiges Sensorelement ist beispielsweise aus der DE 198 34 276 A1 bekannt Das planare, längliche Sensorelement enthält eine elektrochemische Zelle mit einer ersten und einer zweiter Elektrode sowie einem zwischen der ersten und der zweiten Elektrode angeordneten Festelektrolyten. Weiterhin enthält das Sensorelement einen mäanderförmigen Heizer, der zwischen zwei Isolationsschichten angeordnet ist.

Der Heizer und die dem Heizer benachbarten Schichten sind im Betrieb hohen mechanischen Spannungen ausgesetzt, die aus Temperaturschwankungen und innerhalb der Schichten auftretenden Temperaturgradienten resultieren. Um zu verhindern, dass es aufgrund dieser Spannungen zu Rissen beispielsweise in den Isolationsschichten kommt, sind die Isolationsschichten porös ausgebildet und weisen dadurch eine ausreichende Elastizität auf.

Der Heizer ist durch zwei Heizerzuleitungen mit einer außerhalb des Sensorelements angeordneten elektrischen Schaltung verbunden. Das Sensorelement wird auf eine vorbestimmte Temperatur geheizt, indem an den Heizer getaktet eine vorgegebene Heizspannung angelegt wird. Die Regelung der Heizspannung erfolgt über die Bestimmung des temperaturabhängigen Innenwiderstands der elektrochemischen Zelle.

Die Isolationsschichten bestehen beispielsweise aus Aluminiumoxid und enthalten herstellungsbedingt Verunreinigungen wie beispielsweise Natrium. Bei angelegter Heizspannung durch den Spannungsabfall im Bereich des Heizers können leicht bewegliche Ionen wie beispielsweise Natrium-Ionen innerhalb der Heizerisolation wandern und beispielsweise auf einer Seite des Heizers ansammeln. Durch diese Polarisierung der Heizerisolation kommt es beim getaktete Betrieb des Heizers (schlagartiges Zu- beziehungsweise Abschalten der Heizerspannung) zu kapazitiven Einkopplungen des Heizers in die elektrochemische Zelle.

Zu einer Polarisation im Bereich der Heizerisolation kommt es auch bei einer Leckstromprüfung, bei der zwischen dem Heizer und einer Elektrode der elektrochemischen Zelle eine hohe Spannung angelegt wird.

### Vorteile der Erfindung

Das erfindungsgemäße Sensorelement mit den kennzeichnenden Merkmalen des unabhängigen Anspruchs hat demgegenüber den Vorteil, dass eine Wanderung von Ionen aufgrund der an den Heizer angelegten Spannung vermieden wird.

Hierzu ist zwischen benachbart verlaufenden Abschnitten des mäanderförmigen Heizers jeweils mindestens ein Trennelement vorgesehen, das einen geringeren Porenanteil als die poröse Heizerisolation aufweist. Die Bewegungsfähigkeit der Ionen bei einer Heizerisolation mit niedrigem Porenanteil ist deutlich geringer als innerhalb der porösen Heizerisolation. Damit schränken die Trennelemente eine Ionenwanderung innerhalb der Heizerisolation stark ein. Gleichzeitig ist der Heizer in die poröse Heizerisolation eingebettet und damit vollständig von der Heizerisolation umgeben, so dass Risse in der Heizerisolation bei großen Temperaturgradienten vermieden werden.

Durch die in den abhängigen Ansprüchen aufgeführten Maßnahmen sind vorteilhafte Weiterbildungen des im unabhängigen Anspruch angegebenen Sensorelements möglich.

Besonders zuverlässig wird die Wanderung von Ionen vermieden, wenn der Porenanteil der Trennelemente im Bereich von 2 bis 6 Volumenprozent liegt. Eine ausreichende Elastizität der den Heizer umgebenden Heizerisolation ist bei einer Heizerisolation mit einem Porenanteil von 10 bis 20 Volumenprozent gegeben.

Der Heizer wird häufig zur Beheizung einer elektrochemischen Zelle verwendet. Die elektrochemische Zelle ist in den Schichtaufbau des Sensorelements integriert und weist eine erste und eine zweite Elektrode sowie einen zwischen der ersten und der zweiten Elektrode angeordneten Festelektrolyten auf. Ist der Heizer beabstandet von der elektrochemischen Zelle angeordnet, so sind Einkopplungen des Heizers in die elektrochemische Zelle deutlich geringer als beispielsweise bei einem Aufbau, bei dem der Heizer in einer Schichtebene zwischen den beiden Elektroden der elektrochemischen Zelle angeordnet ist.

Da das Trennelement und die Heizerisolation im wesentlichen aus demselben Material bestehen, beispielsweise aus Aluminiumoxid, ist eine gute Verbindung von Trennelement und Heizerisolation gewährleistet.

### Zeichnung

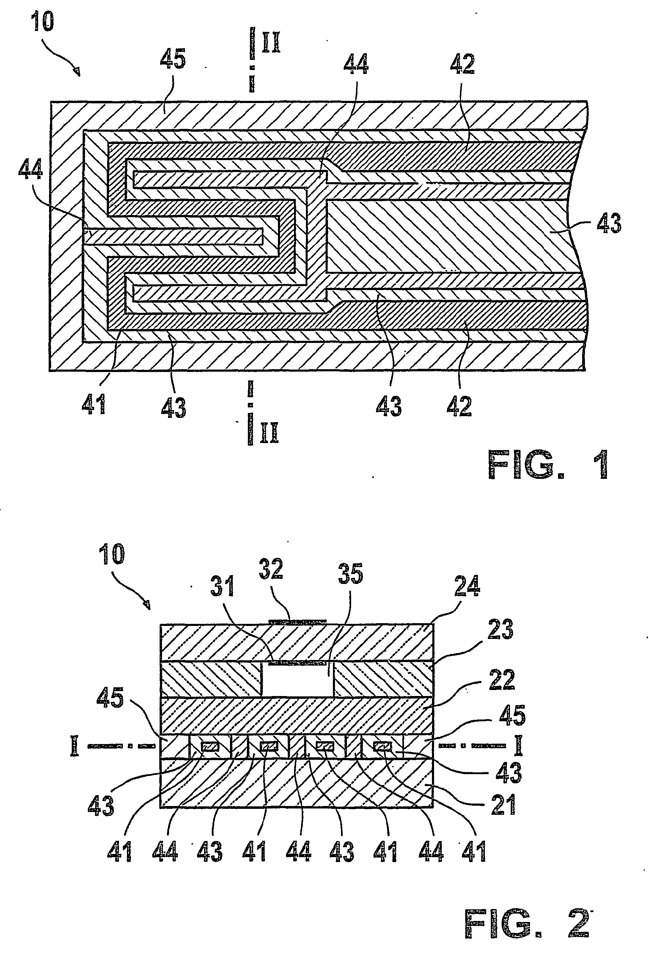

Ein Ausführungsbeispiel der Erfindung ist in der Zeichnung dargestellt und in der nachfolgenden Beschreibung näher erläutert. Es zeigen Figur 1 einen der Schnittlinie I - I in Figur 2 entsprechenden Längsschnitt durch das Ausführungsbeispiel des erfindungsgemäßen Sensorelements und Figur 2 einen der Schnittlinie II - II in Figur 1 entsprechenden Schnitt senkrecht zur Längsachse des Ausführungsbeispiels des erfindungsgemäßen Sensorelements.

### Beschreibung des Ausführungsbeispiels

Figur 1 und Figur 2 zeigen als Ausführungsbeispiel der Erfindung ein Sensorelement 10 mit einer ersten Festelektrolytfolie 21, einer zweiten Festelektrolytfolie 22, einer dritten Festelektrolytfolie 23 und einer vierten Festelektrolytfolie 24.

In die dritte Festelektrolytfolie 23 ist ein Referenzgasraum 35 eingebracht, in dem ein Referenzgas enthalten ist. Hierzu steht der Referenzgasraum 35 beispielsweise über einen sich in Längsrichtung des Sensorelements 10 erstreckenden Kanal und eine anschlussseitige Öffnung mit der Umgebungsluft in Verbindung. Im Referenzgasraum 35 ist auf der vierten Festelektrolytfolie 24 eine erste Elektrode 31 angeordnet. Der ersten Elektrode 31 gegenüberliegend ist auf der Außenfläche der vierten Festelektrolytfolie 24 eine zweite Elektrode 32 vorgesehen. Die erste und zweite Elektrode 31, 32 sowie die vierte Festelektrolytfolie 24 im Bereich der beiden Elektrode 31, 32 bilden eine elektrochemische Zelle.

Zwischen der ersten und zweiten Festelektrolytfolie 21, 22 ist ein mäanderförmiger Heizer 41 angeordnet. Der Heizer 41 ist durch zwei Heizerzuleitungen 42 mit einer außerhalb des Sensorelements 10 angeordneten Schaltung (nicht dargestellt) verbunden, durch die zwischen den beiden Heizerzuleitungen 42 eine Spannung (Heizspannung) anlegbar ist. Der Heizer 41 und die Heizerzuleitungen 42 sind vollständig von einer porösen Heizerisolation 43 umgeben. Der Porenanteil der Heizerisolation 43 liegt bei 15 Volumenprozent. Die Heizerisolation 43 ist in der Schichtebene des Heizers 41 seitlich vollständig von einem Dichtrahmen 45 umgeben, der die Heizerisolation 43 gegenüber dem das Sensorelement 10 umgebenen Gas abdichtet.

Der mäanderförmige Heizer 41 weist vier Abschnitte auf, die parallel zur Längsachse des Sensorelements 10 angeordnet sind. Die vier Abschnitte sind durch drei kürzere Abschnitte senkrecht zur Längsachse des Sensorelements 10 verbunden. Zwischen den benachbarten Abschnitten des Heizers 41 sind Trennelemente 44 vorgesehen, die einen Porenanteil von 4 Volumenprozent aufweisen. Auch zwischen den Heizerzuleitungen 42 sowie zwischen der Heizerzuleitung 42 und einem der Heizerzuleitung 42 benachbarten Abschnitt des Heizers 41 sind Trennelemente 44 vorgesehen.

Die Trennelemente 44 sind jeweils beabstandet zu dem Heizer 41 angeordnet, so dass die Trennelemente 44 und der Heizer 41 durch die poröse Heizerisolation 43 getrennt sind. Die Trennelemente 44 sind so angeordnet, dass eine Ionenwanderung zwischen verschiedenen Abschnitten des Heizers 41 verhindert wird. Die Trennelemente 44 wurden insbesondere in Bereichen angeordnet, in denen zwischen zwei Abschnitten des Heizers 41 bei angelegter Heizspannung eine hohe Spannungsdifferenz besteht, da insbesondere in diesen Bereichen eine starke Ionenwanderung auftreten kann. Weiterhin wird die Ionenwanderung durch hohe Temperaturen begünstigt. Daher ist es besonders wichtig, die Trennelemente 44 in den heißen Bereichen des Sensorelements 10, also insbesondere im Bereich des Heizers 41, vorzusehen.

Der Heizer 41 und die Heizerzuleitungen 42 bestehen aus Platin und einem keramischen Stützgerüst. Die poröse Heizerisolation 43 und die Trennelemente 44 bestehen im wesentlichen aus Aluminiumoxid.

Bei einem weiteren, nicht dargestellten Ausführungsbeispiel der Erfindung ist der Heizer in einer sogenannten Breitband-Lambdasonde angeordnet, die eine elektrochemische Pumpzelle und eine elektrochemische Nernstzelle enthält. Aufbau und Funktionsweise einer derartigen Breitband-Lambda-Sonde ist dem Fachmann bekannt und beispielsweise in der DE 198 53 601 A1 oder in "Automotive electronics handbook", 2. Ausgabe 1999, Herausgeber: Ronald K. Jurgen, McGraw-Hill, Kapitel 7 sowie in den dort zitierten Schriften beschrieben.

Die Erfindung ist nicht auf die im Ausführungsbeispiel dargestellte Form des Heizers beschränkt und lässt sich auf beliebige andere Gestaltungen des Heizers übertragen. Die Erfindung lässt sich weiterhin auf alle schichtförmig aufgebauten Sensorelemente mit Heizer übertragen.

## Patentansprüche

1. Schichtförmig aufgebautes Sensorelement (10), insbesondere in einem Gasmessfühler zum Nachweis einer physikalischen Eigenschaft eines Messgases, vorzugsweise zur Bestimmung der Temperatur des Messgases oder der Konzentration eines Bestandteils des Messgases, mit einem in eine poröse Heizerisolation (43) eingebetteten Heizer (41), **dadurch gekennzeichnet, dass** zwischen zwei benachbarten Abschnitten des Heizers (41) mindestens ein Trennelement (44) vorgesehen ist, das einen geringeren Porenanteil als die poröse Heizerisolation (43) aufweist wobei das Trennelement (44) und die Heizerisolation (43) im wesentlichen aus demselben Material, insbesondere aus Aluminiumoxid, bestehen.

2. Sensorelement nach Anspruch 1, **dadurch gekennzeichnet, dass** die Heizerisolation (43) einen Porenanteil im Bereich von 10 bis 20 Volumenprozent, vorzugsweise 15 Volumenprozent, aufweist.

3. Sensorelement nach Anspruch 1 oder 2, **dadurch gekennzeichnet, dass** das Trennelement (44) einen Porenanteil im Bereich von 0 bis 6 Volumenprozent, vorzugsweise 4 Volumenprozent aufweist.

4. Sensorelement nach einem der vorhergehenden Ansprüche, **dadurch gekennzeichnet, dass** das Trennelement (44) jeweils zwischen zwei parallel zur Längsachse des Sensorelements (10) verlaufenden Abschnitten des Heizers (41) angeordnet ist.

5. Sensorelement nach einem der vorhergehenden Ansprüche, **dadurch gekennzeichnet, dass** das Trennelement (44) in der Schichtebene des Heizers (41) angeordnet ist.

6. Sensorelement nach einem der vorhergehenden Ansprüche, **dadurch gekennzeichnet, dass** das Sensorelement (10) mindestens eine elektrochemische Zelle (25) mit einer ersten Elektrode (31), einer zweiten Elektrode (32) und einer zwischen der ersten und der zweiten Elektrode (31, 32) angeordneten Festelektrolytfolie (24) aufweist, und dass die elektrochemische Zelle (25) durch den Heizer (41) beheizt werden kann.

7. Sensorelement nach Anspruch 6, **dadurch gekennzeichnet, dass** die erste Elektrode (31) in einem Referenzgasraum (35) und die zweite Elektrode (32) auf einer Außenfläche des Sensorelements (10) angeordnet ist

8. Sensorelement nach einem der Anspruche 1 bis 5, **dadurch gekennzeichnet, dass** das Sensorelement eine elektrochemische Pumpzelle und eine elektrochemische Nernstzelle enthält, dass eine Elektrode der elektrochemischen Nernstzelle in einem Referenzgasraum und eine weitere Elektrode der elektrochemischen Nernstzelle in einem im Sensorelement angeordneten Gasraum angeordnet ist, dass eine Elektrode der elektrochemischen Pumpzelle in dem Gasraum und eine weitere Elektrode der elektrochemischen Pumpzelle auf einer dem Messgas zugewandten Außenfläche des Sensorelements angeordnet ist, und das der Gasraum über eine Diffusionsbarriere mit dem außerhalb des Sensorelements befindlichen Messgas verbunden ist.

9. Sensorelement nach einem der Ansprüche 6 bis 8, **dadurch gekennzeichnet, dass** der Heizer (41) beabstandet von der elektrochemischen Zelle (25) angeordnet ist.

## Claims

1. Sensor element (10) with a layered structure, in particular in a gas measuring sensor for detecting a physical property of a measuring gas, preferably for determining the temperature of the measuring gas or the concentration of a constituent of the measuring gas, having a heater (41) which is embedded in a porous heater insulation (43), **characterized in that** at least one separating element (44) which has a lower proportion of pores than the porous heater insulation (43) is provided between two adjacent sections of the heater (41), the separating element (44) and the heater insulation (43) essentially being composed of the same material, in particular aluminium oxide.

2. Sensor element according to Claim 1, **characterized in that** the heater insulation (43) has a proportion of pores in the range from 10 to 20 per cent by volume, preferably 15 per cent by volume.

3. Sensor element according to Claim 1 or 2, **characterized in that** the separating element (44) has a proportion of pores in the range from 0 to 6 per cent by volume, preferably 4 per cent by volume.

4. Sensor element according to one of the preceding claims, **characterized in that** the separating element (44) is respectively arranged between two sections of the heater (41) which run parallel to the longitudinal axis of the sensor element (10).

5. Sensor element according to one of the preceding claims, **characterized in that** the separating element (44) is arranged in the layer plane of the heater (41).

6. Sensor element according to one of the preceding claims, **characterized in that** the sensor element (10) has at least one electrochemical cell (25) having a first electrode (31), a second electrode (32) and a solid electrolyte film (24) which is arranged between the first and second electrodes (31, 32), and **in that** the electrochemical cell (25) can be heated by the heater (41).

7. Sensor element according to Claim 6, **characterized in that** the first electrode (31) is arranged in a reference gas space (35) and the second electrode (32) is arranged on an outer surface of the sensor element (10).

8. Sensor element according to one of Claims 1 to 5, **characterized in that** the sensor element contains an electrochemical pump cell and an electrochemical Nernst cell, **in that** one electrode of the electrochemical Nernst cell is arranged in a reference gas space and a further electrode of the electrochemical Nernst cell is arranged in a gas space arranged in the sensor element, **in that** one electrode of the electrochemical pump cell is arranged in the gas space and a further electrode of the electrochemical pump cell is arranged on an outer surface of the sensor element which faces the measuring gas, and **in that** the gas space is connected to the measuring gas outside the sensor element via a diffusion barrier.

9. Sensor element according to one of Claims 6 to 8, **characterized in that** the heater (41) is arranged at a distance from the electrochemical cell (25).

## Revendications

1. Elément capteur (10) de structure stratifiée, en particulier dans un détecteur de gaz pour mettre en évidence une propriété physique d'un gaz de mesure, de préférence pour déterminer la température du gaz de mesure ou la concentration d'un constituant du gaz de mesure, avec un élément chauffant (41) noyé dans une isolation poreuse (43) d'élément chauffant, **caractérisé en ce que** l'on prévoit entre deux portions adjacentes de l'élément chauffant (41) au moins un élément de séparation (44) qui présente une plus faible proportion de pores que l'isolation poreuse (43) d'élément chauffant, l'élément de séparation (44) et l'isolation (43) d'élément chauffant se composant essentiellement du même matériau, notamment d'oxyde d'aluminium.

2. Elément capteur selon la revendication 1, **caractérisé en ce que** l'isolation (43) d'élément chauffant présente une proportion de pores de l'ordre de 10 à 20 pour cent en volume, de préférence de 15 pour cent en volume.

3. Elément capteur selon la revendication 1 ou 2, **caractérisé en ce que** l'élément de séparation (44) présente une proportion de pores de l'ordre de 0 à 6 pour cent en volume, de préférence de 4 pour cent en volume.

4. Elément capteur selon l'une quelconque des revendications précédentes, **caractérisé en ce que** l'élément de séparation (44) est disposé à chaque fois entre deux portions de l'élément chauffant (41) s'étendant parallèlement à l'axe longitudinal de l'élément capteur (10).

5. Elément capteur selon l'une quelconque des revendications précédentes, **caractérisé en ce que** l'élément de séparation (44) est disposé dans le plan des strates de l'élément chauffant (41).

6. Elément capteur selon l'une quelconque des revendications précédentes, **caractérisé en ce que** l'élément capteur (10) présente au moins une cellule électrochimique (25) avec une première électrode (31), une deuxième électrode (32) et une feuille, d'électrolyte solide (24) disposée entre la première et la deuxième électrode (31, 32), et **en ce que** la cellule électrochimique (25) peut être chauffée par l'élément chauffant (41).

7. Elément capteur selon la revendication 6, **caractérisé en ce que** la première électrode (31) est disposée dans un espace de gaz de référence (35) et la deuxième électrode (32) est disposée sur une surface extérieure de l'élément capteur (10).

8. Elément capteur selon l'une quelconque des revendications 1 à 5, **caractérisé en ce que** l'élément capteur contient une cellule de pompage électrochimique et une cellule de Nernst électrochimique, **en ce qu'**une électrode de la cellule de Nernst électrochimique est disposée dans un espace de gaz de référence et une autre électrode de la cellule de Nernst électrochimique est disposée dans un espace de gaz disposé dans l'élément capteur, **en ce qu'**une électrode de la cellule de pompage électrochimique est disposée dans l'espace de gaz et une autre électrode de la cellule de pompage électrochimique est disposée sur une surface extérieure de l'élément capteur tournée vers le gaz de mesure, et **en ce que** l'espace de gaz est connecté par le biais d'une barrière de diffusion au gaz de mesure se trouvant en dehors de l'élément capteur.

9. Elément capteur selon l'une quelconque des revendications 6 à 8, **caractérisé en ce que** l'élément chauffant (41) est disposé à distance de la cellule électrochimique (25).
